# FASCICULE DE BREVET EUROPEEN

(11) **EP 0 753 425 B1**
(45) Date de publication et mention de la délivrance du brevet: **02.09.1998**
(21) Numéro de dépôt: 96401289.2
(22) Date de dépôt: 13.06.1996
(51) Int. Cl.: B60N 2/06

(54) **Dispositif de réglage longitudinal d'un siège pour véhicule automobile**
Vorrichtung zum Längsverstellen von Kraftfahrzeugsitzen
Device for longitudinally adjusting motor vehicle seats

(30) Priorité: 12.07.1995 FR 9508463
(43) Date de publication de la demande: 15.01.1997
(73) Titulaire: CESA COMPAGNIE EUROPEENNE DE SIEGES POUR AUTOMOBILES, 92307 Levallois-Perret Cédex (FR)
(72) Inventeur: Delatte, Olivier, 45290 Nogent sur Vernisson (FR)
(74) Mandataire: Moncheny, Michel

(56) Documents cités:
- EP-A- 0 076 041
- EP-A- 0 365 975
- DE-A- 2 605 997
- DE-A- 4 201 354
- FR-A- 1 045 087
- FR-A- 2 098 852
- FR-A- 2 310 239

## Description

La présente invention concerne un dispositif de réglage longitudinal d'un siège pour véhicule automobile.

On connaît déjà dans l'état de la technique un dispositif de réglage longitudinal d'un siège pour véhicule automobile du type comportant au moins un ensemble de glissière comprenant un rail mobile profilé en T monté coulissant dans un rail fixe profilé en U, le rail mobile comportant deux tôles jointives délimitant une âme sensiblement verticale de liaison avec le siège, ces tôles étant prolongées par des bords pliés à l'opposé l'un de l'autre, délimitant une semelle de coulissement dans le rail fixe, ce rail fixe comportant une tôle pliée délimitant une âme sensiblement horizontale de fixation à un plancher du véhicule prolongée par deux ailes latérales, repliées l'une vers l'autre, de guidage de la semelle, cette semelle coopérant avec des éléments de roulement logés dans le rail fixe, ledit dispositif de réglage longitudinal comprenant en outre un dispositif de verrouillage du rail mobile comportant un pêne relié à ce rail mobile et coopérant avec des encoches formant gâches ménagées dans le rail fixe.

Un dispositif de ce type est décrit par exemple dans EP-A-0 076 041.

Il est également connu dans l'état de la technique d'équiper un siège pour véhicule automobile d'une ceinture de sécurité embarquée comportant des moyens d'ancrage solidaires du siège.

Le dispositif de réglage longitudinal d'un tel siège doit être adapté pour résister, en cas de choc, aux efforts transmis au plancher par les points d'ancrage de la ceinture retenant un occupant du siège.

L'invention a pour but de proposer un dispositif de réglage longitudinal d'un siège muni de rails dont l'encombrement vertical soit réduit de manière notamment à pouvoir les dissimuler dans l'épaisseur d'une moquette recouvrant le plancher, ce dispositif de réglage pouvant résister efficacement aux efforts subis par le siège lors d'un choc.

A cet effet, l'invention a pour objet un dispositif de réglage longitudinal d'un siège pour véhicule automobile, du type précité, caractérisé en ce que lesdites encoches sont ménagées dans l'une des ailes latérales du rail fixe, le pêne étant monté coulissant sensiblement verticalement dans une découpe de guidage ménagée dans une première tôle jointive délimitant l'âme du rail mobile, le pêne étant de plus articulé sur un levier de manoeuvre entre une extrémité d'appui de ce levier articulée sur l'âme du rail mobile et une extrémité de manoeuvre de ce levier.

Suivant d'autres caractéristiques de l'invention :
- les ailes latérales du rail fixe comprennent des bords libres sensiblement horizontaux, délimitant la partie extrême supérieure du rail fixe, prolongés par des décrochements d'extrémité délimitant une fente de passage de l'âme du rail mobile, les encoches formant gâches étant ménagées dans le décrochement d'extrémité de l'aile latérale correspondante ;
- les éléments de roulement comprennent des billes superposées agencées de part et d'autre de la semelle du rail mobile de manière à coopérer avec des faces opposées de cette semelle et avec des parties extrêmes supérieure et inférieure du rail fixe délimitées par son âme et ses ailes latérales ;
- le pêne est relié à la seconde tôle jointive délimitant l'âme du rail mobile par au moins un bouton solidaire du pêne monté coulissant avec jeu dans une boutonnière sensiblement verticale ménagée dans cette seconde tôle ;
- le pêne comprend au moins deux dents, par exemple quatre, destinées à coopérer avec autant d'encoches du rail fixe ;
- le dispositif de réglage comporte deux ensembles de glissière parallèles ; et
- le dispositif de réglage comporte un palonnier de manoeuvre muni de branches formant les leviers de manoeuvre des pênes des dispositifs de verrouillage des ensembles de glissière.

L'invention sera mieux comprise à la lecture de la description qui va suivre donnée uniquement à titre d'exemple et faite en se référant aux dessins annexés dans lesquels :
- La figure 1 est une vue en perspective d'un dispositif de réglage longitudinal d'un siège, selon l'invention ;
- La figure 2 est une vue en coupe selon la ligne 2-2 de la figure 1, à échelle agrandie ;
- La figure 3 est une vue de détail, à échelle agrandie, de la partie cerclée 3 de la figure 1, le levier de manoeuvre n'ayant pas été représenté pour des raisons de clarté.

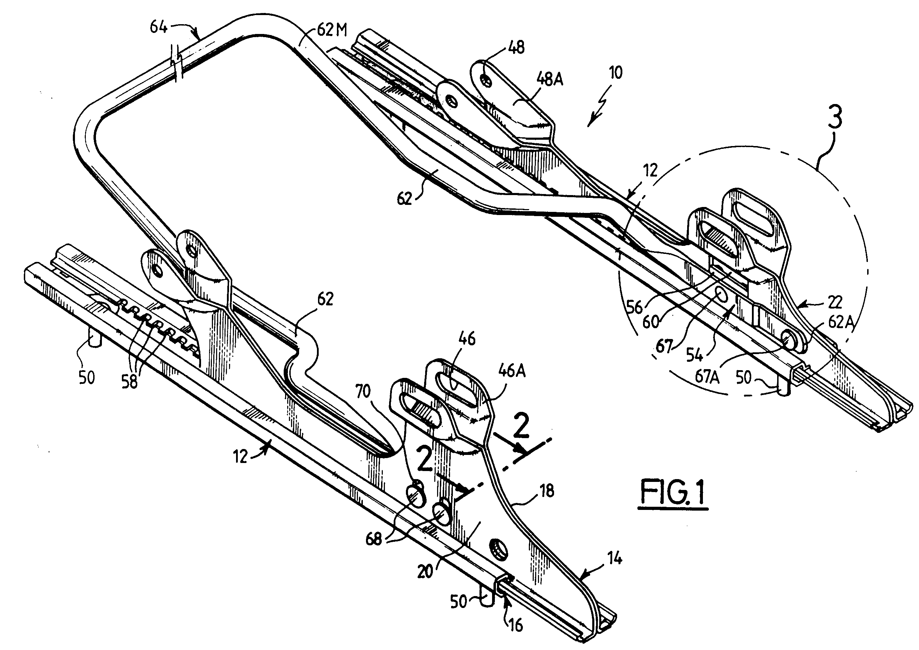

On a représenté sur la figure 1 un dispositif de réglage longitudinal d'un siège pour véhicule automobile, désigné par la référence générale 10.

Ce dispositif de réglage 10 comprend deux ensembles de glissière 12 parallèles et symétriques par rapport à un plan vertical longitudinal médian du siège.

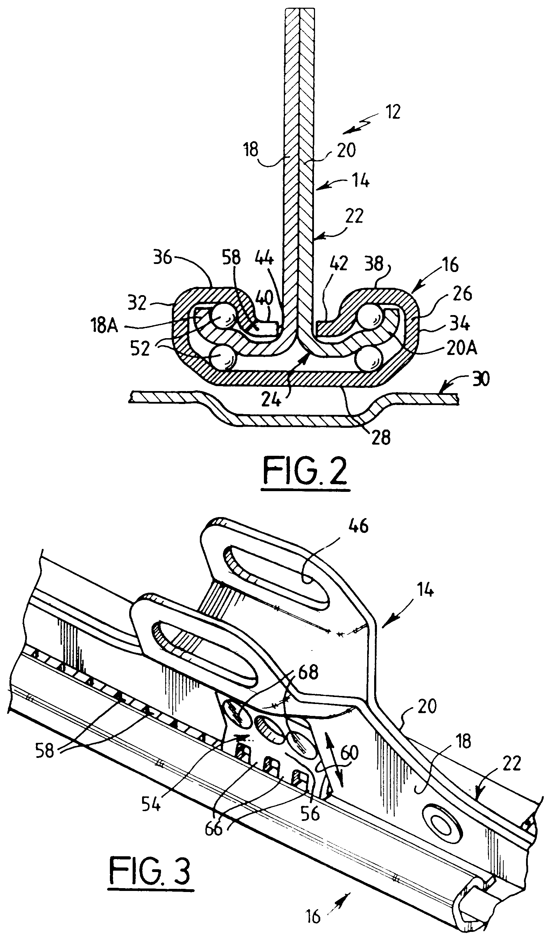

En se référant en particulier à la figure 2 sur laquelle on a représenté un seul ensemble de glissière 12, on voit que ce dernier comprend, de façon classique, un rail mobile 14 profilé en T monté coulissant dans un rail fixe 16 profilé en U.

Le rail mobile 14 comporte deux tôles jointives 18, 20, délimitant une âme 22 sensiblement verticale de liaison avec le siège. Les tôles 18, 20 sont prolongées par des bords 18A, 20A pliés à l'opposé l'un de l'autre, délimitant une semelle 24 de coulissement dans le rail fixe 16.

Les tôles jointives 18, 20 sont reliées entre elles de façon classique, par soudage ou rivetage.

Le rail fixe 16 comporte une tôle 26 pliée délimitant une âme 28 sensiblement horizontale de fixation à un plancher 30 du véhicule prolongée par deux ailes latérales 32, 34 de guidage de la semelle 24. Ces ailes 32, 34 comportent des bords libres 36, 38, sensiblement horizontaux, prolongés par des décrochements d'extrémité 40, 42 délimitant une fente 44 longitudinale de passage de l'âme 22 du rail mobile 14.

L'âme 28 et les bords libres 36, 38 délimitent respectivement les parties extrêmes inférieure et supérieure du rail fixe 16.

L'âme 22 du rail mobile est reliée à une armature de l'assise du siège, soit directement, soit par l'intermédiaire d'un dispositif classique de réglage en hauteur accroché dans des oeillets 46, 48 ménagés dans des flasques 46A, 48A prolongeant les tôles 18, 20 de l'âme 22, comme cela est représenté à la figure 1.

L'âme 28 du rail fixe est fixée sur le plancher 30 par des moyens connus, par exemple des goujons 50 représentés à la figure 1.

La semelle 24 du rail mobile coopère avec des éléments de roulement, logés dans le rail fixe, comprenant des billes superposées 52.

Dans l'exemple décrit, chaque ensemble de glissière comprend douze billes 52 réparties symétriquement par rapport au plan vertical longitudinal médian des rails 14, 16.

Le rail fixe 16 et la semelle 28 du rail mobile 14 présentent des plis délimitant des chemins de roulement pour les billes 52. Ces billes sont agencées de part et d'autre de la semelle 24 de manière qu'elles coopèrent avec les faces opposées de cette semelle et avec les parties extrêmes inférieure 28 et supérieure 36, 38 du rail fixe 16. Ainsi, chaque bille 52 supérieure coopère avec une face d'une tôle 18, 20 de la semelle et une face en regard d'un bord libre 36, 38 du rail fixe, et chaque bille 52 inférieure coopère avec l'autre face de la tôle 18, 20 de la semelle et une face en regard de l'âme 28 du rail fixe 16.

Cet agencement permet d'obtenir des rails d'encombrement vertical réduit. En effet, la dimension verticale maximale du rail fixe 16 est égale, aux tolérances mécaniques près, à la somme des diamètres des billes superposées 52, de l'épaisseur d'une des tôles 18, 20 délimitant la semelle et de la double épaisseur de la tôle 26 délimitant le rail fixe 16.

De plus, les chemins de roulement ménagés dans les plis du rail fixe 16 et de la semelle 24 maintiennent efficacement latéralement et verticalement le rail mobile 14, ceci en utilisant des billes de roulement 52 de diamètre relativement faible réduisant d'autant l'encombrement vertical du rail fixe 16.

Les billes de roulement 52 agencées selon l'invention permettent d'éviter tout contact direct entre les rails 14, 16 ce qui facilite le déplacement relatif de ces rails.

La fente 44 délimitée par les décrochements 40, 42 est relativement étroite évitant ainsi l'introduction dans le rail fixe 16 de salissures ou d'éléments indésirables susceptibles de gêner le coulissement du rail mobile 14.

Chaque rail mobile 14 est verrouillé au moyen d'un dispositif 54 qui est représenté essentiellement aux figures 1 et 3.

Ce dispositif de verrouillage 54 comporte un pêne 56 relié au rail mobile 14 et coopérant avec un des décrochements 40 qui est crénelé de manière à délimiter des encoches 58 formant gâches. Le pêne 54 est monté coulissant sensiblement verticalement dans une découpe de guidage 60 ménagée dans une première tôle jointive 18 délimitant l'âme 22 du rail mobile.

Le pêne 56 est relié à une des deux branches 62 d'un palonnier de manoeuvre 64.

Les branches 62 du palonnier forment des leviers de manoeuvre simultanée des deux pênes 56 associés aux deux ensembles de glissière 12.

Chaque pêne 56 est articulé, au moyen d'une broche 67, sur la branche 62 correspondante entre une extrémité libre d'appui 62A de ce bras, articulée au moyen d'une broche 67A sur l'âme 22 du rail mobile 14, et une extrémité de manoeuvre 62M de ce bras, reliée au reste du palonnier 64.

De préférence, comme illustré sur la figure 3, le pêne 56 comprend au moins deux dents, par exemple quatre, destinées à coopérer avec autant d'encoches 58 du rail fixe 16.

Le pêne 56 est relié à la seconde tôle jointive 20 délimitant l'âme 22 du rail mobile par au moins un bouton 68, de préférence deux boutons 68 comme cela est illustré sur la figure 1. Chaque bouton 68 est monté coulissant avec jeu dans une boutonnière 70 sensiblement verticale, ménagée dans la seconde tôle 20.

Le pêne 56 est sollicité élastiquement en position verrouillée au moyen d'un ressort de rappel classique, non représenté, par exemple filiforme.

Grâce, d'une part, au décalage longitudinal entre l'axe d'articulation du pêne 56 sur le bras 62 (broche 67) et l'axe d'articulation de ce bras sur l'âme 22 du rail mobile (broche 67A), et d'autre part, au guidage vertical du pêne 22 dans la découpe 60, on évite, lors d'un choc, un pivotement accidentel du bras 62 dans son sens de déverrouillage dû au décalage vertical de la broche 67A par rapport aux encoches 58. Ainsi, le dispositif 54 assure un verrouillage du rail mobile irréversible et très robuste, capable de résister aux chocs transmis par une ceinture de sécurité embarquée sur le siège.

L'invention comporte de nombreux avantages.

En particulier, le rail fixe d'un ensemble de glissière selon l'invention a une dimension verticale réduite permettant de le dissimuler dans l'épaisseur d'une moquette recouvrant le plancher du véhicule.

Le rail mobile peut former un longeron d'armature du siège ou être relié à un dispositif de réglage en hauteur de ce siège, ceci en ayant un encombrement vertical réduit. De même, le dispositif de verrouillage de chaque ensemble de glissière est très robuste et d'encombrement vertical réduit.

Les éléments de roulement sont efficacement protégés par les décrochements 40, 42 des bords libres du rail fixe 16.

Le prix de revient d'un ensemble de glissière selon l'invention est relativement faible du fait qu'il comporte un nombre réduit de pièces et que les rails fixe et mobile sont fabriqués au moyen de tôles embouties.

Le dispositif de réglage longitudinal selon l'invention peut être facilement motorisé et/ou équipé de moyens classiques de mémorisation de la position longitudinale du siège.

## Revendications

1. Dispositif de réglage longitudinal d'un siège pour véhicule automobile du type comportant au moins un ensemble de glissière (12) comprenant un rail mobile (14) profilé en T monté coulissant dans un rail fixe (16) profilé en U, le rail mobile (14) comportant deux tôles jointives (18, 20), délimitant une âme (22) sensiblement verticale de liaison avec le siège, ces tôles (18, 20) étant prolongées par des bords (18A, 20A) pliés à l'opposé l'un de l'autre, délimitant une semelle (24) de coulissement dans le rail fixe, ce rail fixe (16) comportant une tôle (26) pliée délimitant une âme (28) sensiblement horizontale de fixation à un plancher (30) du véhicule prolongée par deux ailes latérales (32, 34), repliées l'une vers l'autre, de guidage de la semelle (24), cette semelle (24) coopérant avec des éléments de roulement logés dans le rail fixe (16), ledit dispositif de réglage longitudinal comprenant en outre un dispositif (54) de verrouillage du rail mobile (14) comportant un pêne (56) relié à ce rail mobile et coopérant avec des encoches (58) formant gâches ménagées dans le rail fixe, caractérisé en ce que lesdites encoches (58) sont ménagées dans l'une des ailes latérales (32) du rail fixe, le pêne (56) étant monté coulissant sensiblement verticalement dans une découpe de guidage (60) ménagée dans une première tôle jointive (18) délimitant l'âme (22) du rail mobile, le pêne (56) étant de plus articulé sur un levier de manoeuvre (62) entre une extrémité d'appui (62A) de ce levier articulée sur l'âme (22) du rail mobile et une extrémité de manoeuvre (62M) de ce levier.

2. Dispositif selon la revendication 1, caractérisé en ce que les ailes latérales (32, 34) du rail fixe comprennent des bords libres (36, 38) sensiblement horizontaux, délimitant la partie extrême supérieure du rail fixe, prolongés par des décrochements d'extrémité (40, 42) délimitant une fente (44) de passage de l'âme (22) du rail mobile, les encoches (58) formant gâches étant ménagées dans le décrochement d'extrémité (40) de l'aile latérale (32) correspondante.

3. Dispositif selon la revendication 1 ou 2, caractérisé en ce que les éléments de roulement comprennent des billes (52) superposées agencées de part et d'autre de la semelle (24) du rail mobile de manière à coopérer avec des faces opposées de cette semelle et avec des parties extrêmes supérieure (36, 38) et inférieure (28) du rail fixe délimitées par son âme et ses ailes latérales.

4. Dispositif selon l'une quelconque des revendications 1 à 3, caractérisé en ce que le pêne (56) est relié à la seconde tôle jointive (20) délimitant l'âme (22) du rail mobile par au moins un bouton (66) solidaire du pêne monté coulissant avec jeu dans une boutonnière (70) sensiblement verticale ménagée dans cette seconde tôle (20).

5. Dispositif selon l'une quelconque des revendications 1 à 4, caractérisé en ce que le pêne (56) comprend au moins deux dents (66), par exemple quatre, destinées à coopérer avec autant d'encoches (58) du rail fixe.

6. Dispositif selon l'une quelconque des revendications précédentes, caractérisé en ce qu'il comporte deux ensembles (12) de glissière parallèles.

7. Dispositif selon la revendication 6, caractérisé en ce qu'il comporte un palonnier de manoeuvre (64) muni de branches (62) formant les leviers de manoeuvre des pênes (56) des dispositifs de verrouillage des ensembles de glissière.

## Claims

1. Device for the longitudinal adjustment of a seat for a motor vehicle of the type comprising at least one slide assembly (12) comprising a mobile rail (14) having a T-shaped profile slidingly mounted in a fixed rail (16) having a U-shaped profile, the mobile rail (14) comprising two joined sheets (18, 20), delimiting a substantially vertical web (22) for connecting with the seat, these sheets (18, 20) being extended by edges (18A, 20A) folded in opposite directions from one another, delimiting a foot piece (24) for sliding in the fixed rail, this fixed rail (16) comprising a folded sheet (26) delimiting a substantially horizontal web (28) for fixing to a floor (30) of the vehicle, extended by two lateral flanges (32, 34) folded one towards the other, for guiding the foot piece (24), this foot piece (24) cooperating with rolling elements housed in the fixed rail (16), the said device for longitudinal adjustment furthermore comprising a device (54) for locking the mobile rail (14) comprising a latch (56) connected to this mobile rail and cooperating with notches (58) forming keepers, integrated in the fixed rail, characterised in that the said notches (58) are formed in one of the lateral flanges (32) of the fixed rail, the latch (56) being slidingly and substantially vertically mounted in a guidance cut-out (60) formed in a first joined sheet (18) delimiting the web (22) of the mobile rail, the latch (56) furthermore being articulated on an operating lever (62) between a support end (62A) of this lever articulated on the web (22) of the mobile rail and an operating end (62M) of this lever.

2. Device according to Claim 1, characterised in that the lateral flanges (32, 34) of the fixed rail comprise substantially horizontal free edges (36, 38) delimiting the extreme upper section of the fixed rail, extended by end reverse bends (40, 42) delimiting a slot (44) for the passage of the web (22) of the mobile rail, the notches (58) forming keepers being formed in the end reverse bend (40) of the corresponding lateral flange (32).

3. Device according to Claim 1 or 2, characterised in that the rolling elements comprise superimposed balls (52) arranged on either side of the foot piece (24) of the mobile rail in such a way as to cooperate with the opposite faces of this foot piece and with the extreme upper (36, 38) and lower (28) sections of the fixed rail delimited by its web and its lateral flanges.

4. Device according to any one of Claims 1 to 3, characterised in that the latch (56) is connected to the second joined sheet (20) delimiting the web (22) of the mobile rail by at leas one button (66) integral with the latch slidingly mounted with play in a substantially vertical buttonhole (70) formed in this second sheet (20).

5. Device according to any one of Claims 1 to 4, characterised in that the latch (56) comprises at least two teeth (66), for example four teeth, intended to cooperate with a similar number of notches (58) of the fixed rail.

6. Device according to any one of the preceding claims, characterised in that it comprises two parallel slide assemblies (12).

7. Device according to Claim 6, characterised in that it comprises an operating bar (64) provided with arms (62) forming the levers for operating the latches (56) of the locking devices of the slide assemblies.

## Patentansprüche

1. Vorrichtung zum Längsverstellen eines Kraftfahrzeugsitzes, die mindestens eine Gleitführungseinheit (12) umfaßt, die eine bewegliche Schiene (14) mit T-Profil aufweist, die verschiebbar in einer feststehenden Schiene (16) mit U-Profil montiert ist und zwei aneinandergefügte Bleche (18, 20) umfaßt, die einen im wesentlichen vertikalen Mittelschenkel (22) zur Verbindung mit dem Sitz bilden und durch zueinander entgegengesetzt gebogene Ränder (18A, 20A) verlängert sind, die eine Sohle (24) zum Gleiten in der feststehenden Schiene (16) bilden, wobei diese feststehende Schiene (16) ein gebogenes Blech (26) umfaßt, das einen im wesentlichen horizontalen, zur Befestigung an einem Fahrzeugboden (30) dienenden Mittelteil (28) bildet, der durch zwei aufeinander zu gebogene Seitenteile (32, 34) zur Führung der Sohle (24) verlängert ist, wobei diese Sohle (24) mit Wälzelementen zusammenwirkt, die in der feststehenden Schiene (16) untergebracht sind, und wobei diese Vorrichtung zum Längsverstellen außerdem eine zum Verriegeln der beweglichen Schiene (14) dienende Vorrichtung (54) aufweist, die einen Riegel (56) besitzt, der mit der beweglichen Schiene verbunden ist und mit Sperrasten bildenden Ausschnitten (58) zusammenwirkt, die in der feststehenden Schiene vorgesehen sind, dadurch gekennzeichnet, daß diese Ausschnitte (58) in einem der Seitenteile (32) der feststehenden Schiene vorgesehen sind, wobei der Riegel (56) im wesentlichen vertikal verschiebbar in einem Führungsausschnitt (60) montiert ist, der in einem ersten (18) der aneinandergefügten Bleche vorgesehen ist, das den Mittelschenkel (22) der beweglichen Schiene bildet, wobei der Riegel (56) ferner an einem Bedienungshebel (62) zwischen einem am Mittelschenkel (22) der beweglichen Schiene angelenkten Abstützungsende (62A) dieses Hebels und einem Betätigungsende (62M) dieses Hebels angelenkt ist.

2. Vorrichtung nach Anspruch 1, dadurch gekennzeichnet, daß die Seitenteile (32, 34) der feststehenden Schiene im wesentlichen horizontale freie Ränder (36, 38) aufweisen, die den obersten Bereich der feststehenden Schiene bilden und durch einwärtsgebogene Bereiche (40, 42) verlängert sind, die einen Schlitz (44) zum Durchgang des Mittelschenkels (22) der beweglichen Schiene bilden, wobei die die Sperrasten bildenden Ausschnitte (58) in dem einwärtsgebogenen Bereich (40) des entsprechenden Seitenteils vorgesehen sind.

3. Vorrichtung nach Anspruch 1 oder 2, dadurch gekennzeichnet, daß die Wälzelemente übereinander angeordnete Kugeln (52) umfassen, die zu beiden Seiten der Sohle (24) der beweglichen Schiene angeordnet sind, so daß sie mit einander entgegengesetzten Seiten dieser Sohle und mit dem obersten Bereich (36, 38) und mit dem untersten Bereich (28) der feststehenden Schiene zusammenwirken, die von dem Mittelteil bzw. den Seitenteilen der feststehenden Schiene gebildet werden.

4. Vorrichtung nach einem der Ansprüche 1 bis 3, dadurch gekennzeichnet, daß der Riegel (56) mit dem zweiten (20) der aneinandergefügten Bleche, das den Mittelschenkel (22) der beweglichen Schiene bildet, durch mindestens einen mit dem Riegel fest verbundenen Knopf (66) verbunden ist, der mit Spiel in einem im wesentlichen vertikalen Langloch (70) verschiebbar montiert ist, das in diesem zweiten Blech (20) vorgesehen ist.

5. Vorrichtung nach einem der Ansprüche 1 bis 4, dadurch gekennzeichnet, daß der Riegel (56) mindestens zwei und beispielsweise vier Zähne (66) aufweist, die dazu bestimmt sind, mit ebensovielen Ausschnitten (58) der feststehenden Schiene zusammenzuwirken.

6. Vorrichtung nach einem der vorhergehenden Ansprüche, dadurch gekennzeichnet, daß sie zwei parallele Gleitführungseinheiten (12) aufweist.

7. Vorrichtung nach Anspruch 6, dadurch gekennzeichnet, daß sie einen Betätigungsbügel (64) aufweist, der mit Armen (62) versehen ist, die die Betätigungshebel der Riegel (56) der Verriegelungsvorrichtungen der Gleitführungseinheiten bilden.
